# EUROPÄISCHE PATENTSCHRIFT

(11) **EP 2 828 497 B1**
(45) Veröffentlichungstag und Bekanntmachung des Hinweises auf die Patenterteilung: **04.10.2017**
(21) Anmeldenummer: 13711629.9
(22) Anmeldetag: 19.03.2013
(51) Int. Cl.: F02B 37/18

(54) **WASTEGATE-VENTILVORRICHTUNG**
WASTEGATE VALVE DEVICE
DISPOSITIF DE SOUPAPE DE DÉCHARGE

(30) Priorität: 21.03.2012 DE 102012204497
(43) Veröffentlichungstag der Anmeldung: 28.01.2015
(73) Patentinhaber: Mahle International GmbH, 70376 Stuttgart (DE)
(72) Erfinder: DUSIK, Marius, 73262 Reichenbach (DE); SCHADLER, Werner, A-8430 Seggauberg (AT); WIESKE, Peter, 70825 Korntal-Münchingen (DE)
(74) Vertreter: BRP Renaud & Partner mbB Rechtsanwälte Patentanwälte Steuerberater
(86) Internationale Anmeldenummer: PCT/EP2013/055634
(87) Internationale Veröffentlichungsnummer: WO 2013/139762

(56) Entgegenhaltungen:
- EP-A1- 2 317 095
- EP-A2- 0 972 918
- EP-A2- 1 256 703
- DE-A1-102007 018 618
- DE-A1-102009 057 161
- DE-A1-102010 004 559
- DE-U1-202011 101 119

## Beschreibung

Die vorliegende Erfindung betrifft eine Wastegate-Ventilvorrichtung für eine Ladeeinrichtung, insbesondere für einen Abgasturbolader, mit einem Ventilteller, welcher über einen Antriebsstrang mit einer Aktuatoreinrichtung verbunden ist.

Wastegate-Ventilvorrichtungen für Ladeeinrichtungen, insbesondere für Abgasturbolader, sind hinlänglich aus dem Stand der Technik, beispielsweise aus der DE 10 2007 018 618 A1, bekannt. Sie dienen der Leistungsregulierung der zugehörigen Ladeeinrichtung und sind üblicherweise auf einer Turbinenseite der Ladeeinrichtung angeordnet, um einen eine Turbine bzw. ein Turbinenrad der Ladeeinrichtung umgehenden Bypass freizugeben oder zu schließen. Eine derartige Wastegate-Ventilvorrichtung weist üblicherweise einen Ventilteller auf, der mittels eines Antriebsstrangs mit einer Aktuatoreinrichtung verbunden ist, welche den Teller zwischen einer Offenstellung und einer Schließstellung bewegen kann. Hierbei weisen die Bestandteile der Wastegate-Ventilvorrichtung herstellungs- und montagebedingt relativ zueinander ein Spiel auf. Bei der Schließstellung der Wastegate-Ventilvorrichtung sitzt der Ventilteller auf einem zugehörigen Ventilsitz, welcher üblicherweise in einem Turbinengehäuse der Ladeeinrichtung ausgebildet bzw. angeordnet ist. Bei der Offenstellung der Wastegate-Ventilvorrichtung löst sich der Ventilteller vom Ventilsitz, so dass betriebsbedingt Schwingungen, insbesondere des Ventiltellers, auftreten können, welche einerseits zu Beschädigungen der Wastegate-Ventilvorrichtung, insbesondere des Antriebsstrangs, führen können und andererseits zu einer unerwünschten Geräuschentwicklung führen können. Derartige Schwingungen treten insbesondere dann auf, wenn der Ventilteller bei Teillast einer zugehörigen Kraftmaschine, insbesondere Brennkraftmaschine, geöffnet wird, was beispielsweise durch elektrisch betriebene Aktuatoreinrichtungen möglich ist.

Die vorliegende Erfindung beschäftigt sich mit dem Problem, für eine Wastegate-Ventilvorrichtung für eine Ladeeinrichtung, insbesondere für einen Abgasturbolader, der gattungsgemäßen Art eine verbesserte oder zumindest alternative Ausführungsform anzugeben, die sich insbesondere durch eine reduzierte Bildung von Schwingungen und/oder durch eine reduzierte Geräuschentwicklung und/oder durch einen reduzierten Verschleiß auszeichnet. Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, die insbesondere bei einer Offenstellung des Ventiltellers einer Wastegate-Ventilvorrichtung auftretenden Schwingungen mit Hilfe zumindest eines Dämpfungselements zu dämpfen und somit einerseits einen durch derartige Schwingungen verursachten Verschleiß der Wastegate-Ventilvorrichtung zu verhindern oder zumindest zu reduzieren und andererseits durch diese Schwingungen auftretende Geräuschbildungen zu verhindern oder zumindest zu reduzieren. Das Dämpfungselement dient also dem Zweck, die zwischen dem Ventilteller und der Aktuatoreinrichtung zur Betätigung des Ventiltellers auftretenden Schwingungen zu dämpfen. Hierbei ist das Dämpfungselement bevorzugt in den Antriebsstrangs integriert, über den die Aktuatoreinrichtung den Ventilteller betätigt.

Aus dem Erfindungsgedanken ergeben sich grundsätzlich zwei Möglichkeiten ein solches Dämpfungselement auszugestalten bzw. anzuordnen. Bei der ersten erfindungsgemäßen Möglichkeit ist das Dämpfungselement als separates Bauteil zwischen dem Ventilteller und der Aktuatoreinrichtung, vorzugsweise im Antriebsstrang, angeordnet. Bei der zweiten Möglichkeit ist das Dämpfungselement als integraler Bestandteil des Antriebsstrangs, bspw. durch eine entsprechende Verformung des Antriebsstranges, ausgebildet.

In diesem Sinne sind unter Dämpfungselementen sowohl separate Bestandteile bzw. Bauteile als auch integrale Bestandteile des Antriebsstrangs zu verstehen. Hierbei ist ein derartiges Dämpfungselement an einer Stelle des Antriebsstrangs angeordnet, an der eine kraftschlüssige oder formschlüssige Verbindung zwischen zwei separaten Bauteilen realisiert ist.

Der Ventilteller der Wastegate-Ventilvorrichtung ist mit einem Spindelarm einer Spindel verbunden, welche, bspw. mittels einer Buchse, in einem Gehäuse der zugehörigen Ladeeinrichtung gelagert ist. Dabei können die Spindel und der Spindelarm einteilig ausgebildet sein. Die Spindel ist auf der außerhalb des Gehäuses liegenden Seite drehfest mit einem Betätigungsarm verbunden, welcher andererseits drehbar mit einer Betätigungsstange verbunden ist. Die Betätigungsstange ist zudem mit der Aktuatoreinrichtung verbunden, wobei das zumindest eine Dämpfungselement an oder in einer dieser Verbindungsstellen angeordnet ist. Der Antriebsstrang weist also in einem Außenabschnitt die Betätigungsstange und den Betätigungsarm auf, und in einem Innenabschnitt den Spindelarm, wobei die beiden Abschnitte des Antriebsstrangs mittels der Spindel miteinander verbunden sind. Hierbei liegt der Innenabschnitt innerhalb eines Fluidpfades eines antreibenden Fluids, insbesondere eines Abgases einer zugehörigen Brennkraftmaschine, während der Außenabschnitt außerhalb dieses Fluidpfades liegt. Das zumindest eine Dämpfungselement ist im Außenabschnitt des Antriebsstrangs angeordnet. Der Innenabschnitt ist aggressiveren thermodynamischen Bedingungen, insbesondere höheren Temperaturen, ausgesetzt als der Außenabschnitt, so dass durch die Anordnung des zumindest einen Dämpfungselements im Außenabschnitt eine niedrigere Belastung des Dämpfungselements erreicht wird. Damit ist es insbesondere auch möglich kostengünstigere Materialien, bspw. Kunststoffe und dergleichen zu verwenden und/oder die Lebensdauer der Wastegate-Ventilvorrichtung zu verlängern.

Die Betätigungsstange weist ein Kopplungsglied auf, welches mit dem Betätigungsarm verbunden ist. Hierdurch kann die Betätigungsstange also zweiteilig ausgebildet sein, wobei die Verbindung des Kopplungsgliedes mit der restlichen Betätigungsstange dadurch realisiert sein kann, dass das Kopplungsglied eine Ausnehmung aufweist, in der ein Kopplungsabschnitt der Betätigungsstange drehfest angeordnet ist. Hierbei kann das Kopplungsglied flacher ausgeführt sein als die restliche Betätigungsstange. Bei einer derartigen Verbindung kann ein solches Dämpfungselement in der Ausnehmung zwischen dem Kopplungsglied und der Betätigungsstange angeordnet sein. Die Verbindung zwischen dem Kopplungsglied und der Betätigungsstange ist derart realisiert, dass der Kopplungsabschnitt mittels einer Hülse mit dem Kopplungsglied verbunden ist, wobei die Hülse den Kopplungsabschnitt und das Kopplungsglied zumindest bereichsweise mit einer Vorspannung umgibt, so dass das Kopplungsglied und der Kopplungsabschnitt der Betätigungsstange von außen radial und/oder axial gegeneinander gedrückt werden. Hierbei ist zwischen der Hülse und der Betätigungsstange ein solches Dämpfungselement angeordnet. Auch ist es denkbar, ein solches Dämpfungselement zwischen der Hülse und dem Kopplungsglied anzuordnen. Bei diesen Varianten ist das bevorzugt aus einem Kunststoff hergestellte Dämpfungselement, insbesondere durch die Vorspannung der Hülse ebenfalls vorgespannt, wobei die Vorspannung derart gewählt wird, dass das Dämpfungselement die gewünschte dämpfende Eigenschaft aufweist.

Die Hülse kann dabei den Kopplungsabschnitt und/oder das Kopplungsglied über den gesamten Umfang oder über einen Abschnitt des Umfangs umgeben bzw. umschließen. Ebenso ist es vorstellbar, dass die Hülse den Kopplungsabschnitt und/oder das Kopplungsglied in der Umfangsrichtung abschnittsweise umgibt.

Der Kopplungsabschnitt kann eine beliebige Form und/oder Größe, insbesondere länge aufweisen. Der Kopplungsabschnitt kann beispielsweise zumindest bereichsweise kugelförmig ausgebildet sein bzw. einen Kugelabschnitt aufweisen. Die kugelförmige Ausbildung ist hierbei bevorzugt auf der dem Kopplungselement zugewandten Seite des Kopplungsabschnitts angeordnet bzw. realisiert.

Zur Verbindung mit der Betätigungsstange, insbesondere mit dem Kopplungsglied der Betätigungsstange, kann der Betätigungsarm eine Öffnung aufweisen. Die Öffnung des Betätigungsarms kann von einem Bolzen durchsetzt sein, der den Betätigungsarm mit der Betätigungsstange drehbar verbindet. Hierbei kann ein solches Dämpfungselement in diesem Verbindungsbereich angeordnet sein. Bevorzugt weist ein solches Dämpfungselement eine Außenhülse auf, welche eine Innenhülse umgibt, welche ihrerseits den Bolzen umgibt. Zwischen der Außenhülse und der Innenhülse ist zudem ein Dämpfungsmaterial angeordnet. Hierbei ist die Innenhülse mit dem einen Verbindungspartner verbunden, während die Außenhülse mit dem anderen Verbindungspartner verbunden ist. Das heißt insbesondere, dass die Innenhülse mit dem Betätigungsarm verbunden sein kann, während die Außenhülse mit der Betätigungsstange verbunden ist oder umgekehrt. Als Dämfungsmaterial kommt bspw. ein Kunststoff und/oder ein metallisches Material, bspw. Metallvlies zum Einsatz. Bei dieser Variante kann das Dämpfungselement also insbesondere als Torsionsdämpfer ausgestaltet sein. Die drehfeste Verbindung zwischen dem Betätigungsarm und der Spindel kann ebenfalls mit Hilfe einer solchen Öffnung des Betätigungsarms realisiert sein. Hierbei kann die Spindel drehfest in der Öffnung des Betätigungsarms angeordnet sein. Auch an dieser Verbindungsstelle kann ein solches Dämpfungselement angeordnet sein. Das zumindest eine Dämpfungselement weist ein Metallvlies und/oder einen Kunststoff, insbesondere Polytetrafluorethylen, auf. Insbesondere kann das Dämpfungsmaterial des Dämpfungselements aus einem solchen Material hergestellt sein und/oder das Dämpfungselement aus einem solchen Material bestehen.

Bevorzugt ist das zumindest eine Dämpfungselement derart ausgebildet bzw. ausgestaltet, dass es Schwingungen mit Ordnungen von zwei oder höher gegenüber einer Grundschwingung dämpft.

Bei weiteren bevorzugten Ausführungsformen ist ein solches Dämpfungselement derart ausgebildet bzw. ausgestaltet, insbesondere aus solchen Materialien hergestellt, dass es zusätzlich zur Dämpfung der Schwingungen eine thermische Entkopplung zwischen den Verbindungspartnern bzw. innerhalb des Antriebsstrangs gewährleistet. Ein derartiges Dämpfungselement weist also insbesondere eine geringe thermische Leitfähigkeit auf, so dass es auch als thermische Entkopplung fungiert.

Die Aktuatoreinrichtung der Wastegate-Ventilvorrichtung kann beliebig ausgestaltet bzw. ausgebildet sein. Bevorzugt ist die Aktuatoreinrichtung jedoch elektrisch betrieben. Vorstellbar sind aber auch pneumatisch oder hydraulisch betriebene Aktuatoreinrichtungen.

Es versteht sich, dass die erfindungsgemäße Wastegate-Ventilvorrichtung mehrere derartige Dämpfungselemente aufweisen kann, die gleich oder unterschiedlich ausgebildet bzw. ausgestaltet sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Es zeigen, jeweils schematisch,
- Fig. 1: ein Schnitt durch eine Ladeeinrichtung mit einer Wastegate-Ventilvorrichtung,
- Fig. 2: eine Außenansicht einer Wastegate-Ventilvorrichtung,
- Fig. 3 bis 9: unterschiedliche Ausschnitte eines Antriebsstrangs einer Wastegate-Ventilvorrichtung.

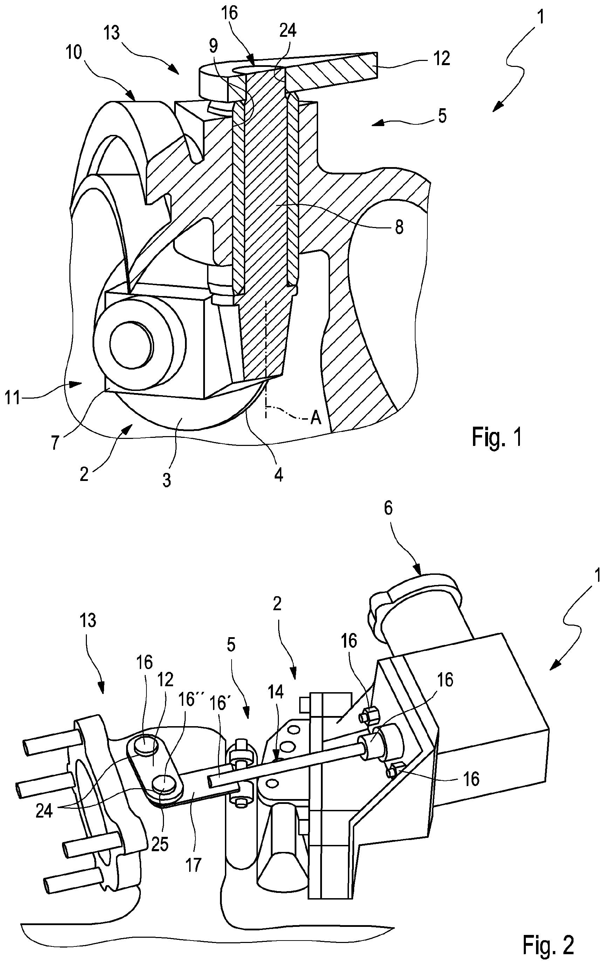

Entsprechend den Fig. 1 und 2 weist eine Ladeeinrichtung 1, die im gezeigten Beispiel als Abgasturbolader 1 ausgebildet ist, eine Wastegate-Ventilvorrichtung 2 auf, die einen Ventilteller 3 umfasst, mit der eine Öffnung 4 eines Bypasses freigegeben werden kann, wobei in Fig. 1 eine Schließstellung des Ventiltellers 3 gezeigt ist, bei der die Öffnung 4 verschlossen ist. Der Ventilteller 3 ist mit Hilfe eines Antriebstrangs 5 der Wastegate-Ventilvorrichtung 2 mit einer Aktuatoreinrichtung 6 der Wastegate-Ventilvorrichtung 2 verbunden. Der Antriebsstrang 5 umfasst einen Spindelarm 7, der den Ventilteller 3 mit einer Spindel 8 des Antriebsstrangs 5 verbindet, wobei die Spindel 8 und der Spindelarm 7 bei der in Fig. 1 gezeigten Ausführungsform einteilig ausgebildet sind. Die Spindel 8 ist in einer Gehäuseöffnung 9 des Gehäuses 10 des Abgasturboladers 1 gelagert, so dass sich der Ventilteller 3 und der Spindelarm 7 in einem Innenabschnitt 11 des Antriebsstrangs 5 befinden, welcher, insbesondere bei geöffneter Stellung des Ventiltellers 3, dem die Ladeeinrichtung 1 antreibenden Abgas ausgesetzt ist und sich dementsprechend in einem Fluidpfad des Abgases befindet.

Auf der Außenseite des Gehäuses 10, das heißt auf der vom Ventilteller 3 abgewandten Seite, ist die Spindel 8 mit einem Betätigungsarm 12 des Antriebsstrangs 5 drehfest verbunden, wobei der Betätigungsarm 12 dementsprechend in einem Außenabschnitt 13 des Antriebsstrangs 5 angeordnet ist. Der Betätigungsarm 9 ist außerdem drehbar mit einer Betätigungsstange 14 des Antriebsstrangs 5 verbunden, welche mit der Aktuatoreinrichtung 6 verbunden ist und mit dieser zusammenwirkt. Eine Ansteuerung der Aktuatoreinrichtung 6 führt zu einer Verstellbewegung des Antriebsstranges 5 und über diesen zu einem Verschwenken des Ventiltellers 3 um die Spindelachse A.

Erfindungsgemäß ist zwischen dem Ventilteller 4 und der Aktuatoreinrichtung 6 zumindest ein Dämpfungselement 15 vorgesehen. Nachfolgend werden einige solche Dämpfungselemente 15 dargestellt. Hierbei kann das zumindest eine Dämpfungselement 15 insbesondere in einem Verbindungsbereich 16 zwischen den einzelnen Bestandteilen des Antriebsstrangs 5 bzw. in Verbindungsbereichen 16 zwischen dem Antriebsstrang 5 und der Aktuatoreinrichtung 6 realisiert sein.

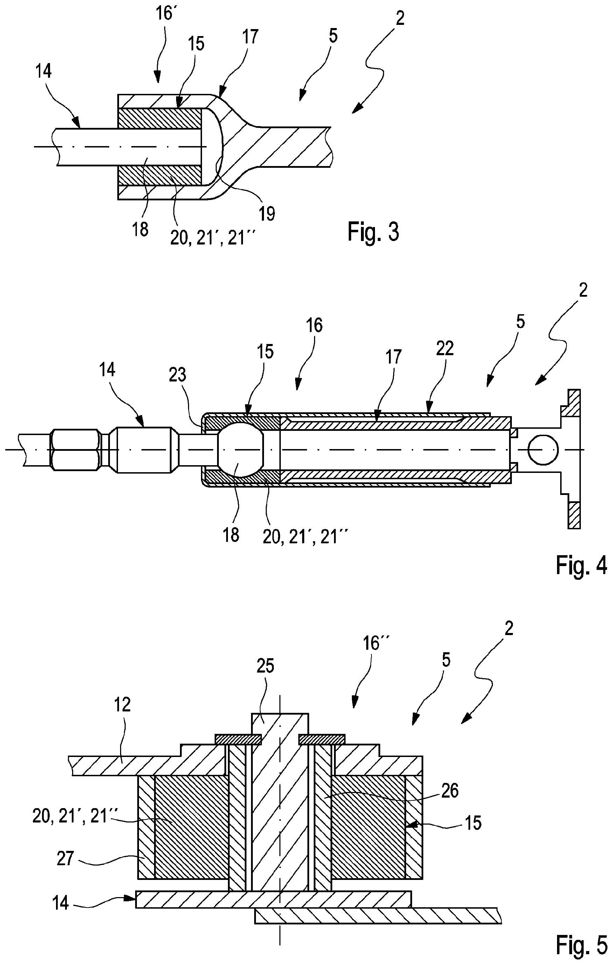

Wie insbesondere Fig. 2 zu entnehmen ist, kann die Betätigungsstange 14 zum Beispiel ein Kopplungsglied 17 aufweisen, das mit dem Betätigungsarm 12 drehbar verbunden ist. In diesem Verbindungsbereich 16' ist, wie in Fig. 3 gezeigt, ein Kopplungsabschnitt 18 der Betätigungsstange 14 mit dem Kopplungsglied 17 verbunden. Hierbei weist das Kopplungsglied 17 eine Ausnehmung 19 auf, in der der Kopplungsabschnitt 18 der Betätigungsstange 14 angeordnet ist. Innerhalb der Ausnehmung 19 ist ein solches Dämpfungselement 15 angeordnet, welches den Kopplungsabschnitt 18 zumindest teilweise umschließt und zwischen dem Kopplungsabschnitt 18 und dem Kopplungsglied 17 vorgespannt ist. Dieses Dämpfungselement 15 ist bspw. ein Dämpfungsmaterial 20, das beispielsweise aus Metallvlies 21' oder aus Kunststoff 21" bestehen kann, so dass Schwingungen innerhalb des Antriebsstrangs 5 gedämpft werden.

Ein weiteres Beispiel einer Betätigungsstange 14 ist in Fig. 4 dargestellt. Hierbei weist das Dämpfungselement 15 eine Hülse 22 sowie ein Dämpfungsmaterial 20 auf. Die Hülse 22 umschließt den bereichsweise kugelförmig ausgebildeten Kopplungsabschnitt 18 und das Kopplungsglied 17 zumindest teilweise. Hierbei ist radial zwischen dem Kopplungsabschnitt 18 und der Hülse 22 das Dämpfungsmaterial 20 angeordnet. Des Weiteren ist die vorzugsweise aus metallischen Werkstoffen hergestellte Hülse 22 derart ausgebildet bzw. montiert, dass sie das Dämpfungsmaterial 20 gegen den Kopplungsabschnitt 18 andrückt und somit vorspannt, während sie gleichzeitig gegen das Kopplungsglied 17 vorgespannt ist. Zudem bewirkt eine axiale Vorspannung der Hülse 22 gegenüber dem Kopplungsglied 17 eine radiale Vorspannung der Hülse 22 und somit des Dämpfungsmaterials 20 gegenüber dem Kopplungsabschnitt 18. Ferner weist die Hülse 22 auf der von dem Kopplungsglied 17 abgewandten Seite einen nach innen gerichteten Rand 23 auf, der die Betätigungsstange 14 auf der vom Kopplungsglied 17 abgewandten Seite des Kopplungsabschnittes 18 kontaktiert. Dementsprechend umgreift die Hülse 22 den Kopplungsabschnitt 18, womit ein Wegknicken des Kopplungsabschnittes 18 relativ zum Kopplungsglied 17 verhindert wird. Das Wegknicken des Kopplungsabschnitts 18 kann durch die Vorspannung des Dämpfungsmaterials 20 erreicht werden. Alternativ oder zusätzlich kann das Wegknicken auch dadurch unterbunden werden, dass die Haftreibung und/oder die geometrische Form, z.B. eine ovale Form, des Kopplungsabschnitts 18 bzw. des Dämpfungsmaterials 20 entsprechend ausgewählt wird.

Wie in Fig. 1 und 2 dargestellt, weist der Betätigungsarm 12 zwei Öffnungen 24 auf. In einer dieser Öffnungen 24 ist die Spindel 8 drehfest angeordnet. In der anderen Öffnung 24 ist im Verbindungsbereich 16" ein Bolzen 25 angeordnet, der andererseits mit der Betätigungsstange 14 verbunden ist, wodurch eine drehbare Verbindung zwischen der Betätigungsstange 14 und dem Hebelarm 12 realisiert ist. Fig. 5 zeigt einen vergrößerten Ausschnitt des Verbindungsbereichs 16", gemäß einer nicht erfindungsgemäßen Variante. Wie zu sehen, weist das Dämpfungselement 15 eine den Bolzen 25 umgebende Innenbuchse 26 auf, die von einer Außenbuchse 27 des Dämpfungselements 15 umgeben ist. Zwischen der Innenbuchse 26 und der Außenbuchse 27 ist Dämpfungsmaterial 20 angeordnet. Ferner ist die Innenbuchse 26 mit dem einen Verbindungspartner verbunden, während die Außenbuchse 27 mit dem anderen Verbindungspartner verbunden ist. Im gezeigten Beispiel ist die Innenbuchse 26 mit der Betätigungsstange 14 verbunden, während die Außenbuchse 27 mit dem Betätigungsarm 12 verbunden ist. Somit wirkt das Dämpfungselement 15 als eine Art Torsionsdämpfer.

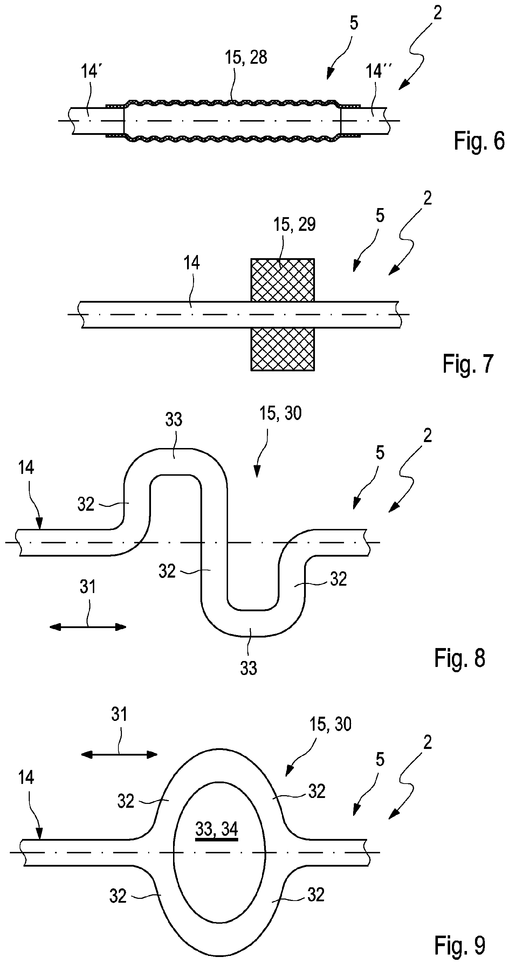

Als Dämpfungsmaterialien 20 kommen, wie bereits erwähnt, beispielsweise Metallvlies 21' oder Kunststoff 21" zum Einsatz, wobei als Kunststoff 21" bevorzugt Polytetrafluorethylen und/oder Elastomere eingesetzt werden. Zumindest ein solches Dämpfungselement 15 kann auch innerhalb der Betätigungsstange 14 angeordnet sein. Fig. 6 zeigt bspw. ein nichterfindungsgemäßes Dämpfungselement 15, welches als Federeinrichtung 28 ausgebildet ist und zwei voneinander getrennte Betätigungsstangenteile 14', 14" miteinander verbindet.

In Fig. 7 ist ein als Schwingungstilger 29 ausgestaltetes nichterfindungsgemäßes Dämpfungselement 15 dargestellt, das die Betätigungsstange 14 umgibt und mit dieser verbunden ist. Hierbei ist der Schwingungstilger 29 als eine Masse ausgestaltet, die eine Unwucht erzeugt, welche die Schwingungen des Antriebsstrangs 4 durch Tilgung dämpft.

Das zumindest eine Dämpfungselement 15 kann auch als integraler Bestandteil des Antriebsstrangs 5 ausgestaltet sein. Fig. 8 und Fig. 9 zeigen nichterfindungsgemäße Beispiele derartiger Dämpfungselemente 15, wobei diese als Umformungen 30 der Betätigungsstange 14 realisiert sind. Diese integral in der Betätigungsstange 14 ausgebildeten Dämpfungselemente 15 weisen quer zu einer Längsausstreckung 31 der Betätigungsstange 14 verlaufende Abschnitte 32 auf. Zudem sind beide Dämpfungselemente 15 bezüglich der Längsmittelachse der Betätigungsstange 14 und senkrecht dazu symmetrisch ausgebildet.

Beim in Fig. 8 gezeigten Beispiel verlaufen die Abschnitte 32 im Wesentlichen senkrecht zur Längsausstreckung 31 der Betätigungsstange 14 und sind durch parallel zur Längsausstreckung 31 verlaufende andere Verbindungsabschnitte 33 miteinander verbunden, so dass das Dämpfungselement 30 als eine Verbiegung der Betätigungsstange 14 ausgestaltet ist.

Das in Fig. 9 gezeigte Dämpfungselement 15 ist oval ausgebildet, wobei die quer zur Längsausstreckung 31 verlaufenden Abschnitte 32 eine ebenfalls ovale Dämpfungselementöffnung 33 umschließen. Ebenfalls kann der in Fig. 9 gezeigte Abschnitt einen Querschnitt darstellen, so dass die quer zur Längsausstreckung 31 verlaufenden Abschnitte 32 Ei-förmig angeordnet sind und einen Lufteinschluss 34 umgeben.

## Patentansprüche

1. Wastegate-Ventilvorrichtung (2) für eine Ladeeinrichtung (1), insbesondere für einen Abgasturbolader (1),
mit einem Ventilteller (3), der mittels eines Antriebsstranges (5) mit einer Aktuatoreinrichtung (6) verbunden ist,
wobei zwischen dem Ventilteller (3) und der Aktuatoreinrichtung (6) zumindest ein Dämpfungselement (15) vorgesehen ist,
wobei der Antriebsstrang (5) in einem innerhalb eines Fluidpfads eines antreibenden Fluids angeordneten Innenabschnitt (11) des Antriebstranges (5) einen mit einer Spindel (8) verbundenen Spindelarm (7) aufweist, der mit dem Ventilteller (3) verbunden ist,
wobei die Spindel (8) mit einem in einem außerhalb des Fluidpfads angeordneten Außenabschnitt (13) des Antriebstrangs (5) angeordneten Betätigungsarm (12) verbunden ist, der mit einer Betätigungsstange (14) verbunden ist, die mit der Aktuatoreinrichtung (6) verbunden ist,
wobei das Dämpfungselement (15) in einem Verbindungsbereich (16) zwischen diesen Bestandteilen angeordnet ist,
**dadurch gekennzeichnet,**
**dass** die Betätigungsstange (14) ein Kopplungsglied (17) aufweist, das mit dem Betätigungsarm (12) verbunden ist,
**dass** das Dämpfungselement (15) eine Hülse (22) umfasst, die einen Kopplungsabschnitt (18) der Betätigungsstange (14) und das Kopplungsglied (17) mit Vorspannung umgibt,
**dass** zwischen der Hülse (22) und dem Kopplungsabschnitt (18) und/oder zwischen der Hülse (22) und dem Kopplungsglied (17) zumindest ein Dämpfungsmaterial (20) des Dämpfungselements (15) angeordnet ist,
**dass** das Dämpfungselement (15) zumindest teilweise aus Metallvlies (21')
und/oder aus Kunststoff (21 "), insbesondere aus Polytetrafluorethylen
und/oder aus einem Elastomer, hergestellt ist.

2. Wastegate-Ventilvorrichtung nach Anspruch 1,
**dadurch gekennzeichnet,**
**dass** das Dämpfungselement (15) derart ausgebildet, insbesondere aus solchen Materialien hergestellt, ist, dass es auch thermisch entkoppelt.

3. Wastegate-Ventilvorrichtung nach Anspruch 1 oder 2,
**dadurch gekennzeichnet,**
**dass** die Aktuatoreinrichtung (6) elektrisch betrieben ist.

4. Wastegate-Ventilvorrichtung nach einem der Ansprüche 1 bis 3,
**dadurch gekennzeichnet,**
**dass** der Kopplungsabschnitt (18) zumindest bereichsweise kugelförmig ausgebildet ist.

5. Wastegate-Ventilvorrichtung nach einem der Ansprüche 1 bis 4,
**dadurch gekennzeichnet,**
**dass** die Hülse (22) den Kopplungsabschnitt (18) und/oder das Kopplungsglied (17) entlang des gesamten Umfangs umgibt.

## Claims

1. A wastegate valve device (2) for a supercharging device (1), in particular for an exhaust gas turbocharger (1),
having a valve disc (3), which is connected to an actuator device (6) by means of a drive train (5),
wherein at least one damping element (15) is provided between the valve disc (3) and the actuator device (6),
wherein the drive train (5) has in an inner section (11) of the drive train (5), which is arranged inside a fluid path of a driving fluid, a spindle arm (7), which is connected to a spindle (8) and is connected to the valve disc (3),
wherein the spindle (8) is connected to an operating arm (12), which is arranged in an outer section (13) of the drive train (5), which is arranged outside the fluid path, and is connected to an operating rod (14), which is connected to the actuator device (6),
wherein the damping element (15) is arranged in a connection region (16) between said constituents,
**characterised in that**
the operating rod (14) has a coupling member (17), which is connected to the operating arm (12),
the damping element (15) comprises a sleeve (22), which surrounds a coupling section (18) of the operating rod (14) and the coupling member (17) with prestress,
at least one damping material (20) of the damping element (15) is arranged between the sleeve (22) and the coupling section (18) and/or between the sleeve (22) and the coupling member (17),
the damping element (15) is produced at least partially from metal fleece (21') and/or from plastic (21 "), in particular from polytetrafluoroethylene and/or from an elastomer.

2. The wastegate valve device according to Claim 1,
**characterised in that**
the damping element (15) is formed in such a manner, in particular produced from such materials, that it also decouples thermally.

3. The wastegate valve device according to Claims 1 or 2,
**characterised in that**
the actuator device (6) is electrically operated.

4. The wastegate valve device according to any one of Claims 1 to 3,
**characterised in that**
the coupling section (18) is spherical at least in some regions.

5. The wastegate valve device according to any one of Claims 1 to 4,
**characterised in that**
the sleeve (22) surrounds the coupling section (18) and/or the coupling member (17) over the entire circumference.

## Revendications

1. Dispositif de soupape de décharge (2) pour un système de charge (1), en particulier pour un turbocompresseur à gaz d'échappement (1),
avec une tête de soupape (3), qui est reliée à un système actionneur (6) au moyen d'un groupe motopropulseur (5),
dans lequel au moins un élément d'amortissement (15) est prévu entre la tête de soupape (3) et le système actionneur (6),
dans lequel le groupe motopropulseur (5) présente, dans une section intérieure (11), disposée à l'intérieur d'une voie de fluide d'un fluide d'entraînement, du groupe motopropulseur (5), un bras de broche (7) relié à une broche (8), lequel bras de broche est relié à la tête de soupape (3),
dans lequel la broche (8) est reliée à un bras d'activation (12) disposé dans une section extérieure (13), disposée à l'extérieur de la voie de fluide, du groupe motopropulseur (5), lequel bras d'activation est relié à une tige d'activation (14), qui est reliée au système actionneur (6),
dans lequel l'élément d'amortissement (15) est disposé dans une zone de liaison (16) entre lesdits composants,
**caractérisé en ce**
**que** la tige d'activation (14) présente un organe de couplage (17), qui est relié au bras d'activation (12),
**que** l'élément d'amortissement (15) comprend une douille (22), qui entoure avec une précontrainte une section de couplage (18) de la tige d'activation (14) et l'organe de couplage (17),
**qu'**au moins un matériau d'amortissement (20) de l'élément d'amortissement (15) est disposé entre la douille (22) et la section de couplage (18) et/ou entre la douille (22) et l'organe de couplage (17),
**que** l'élément d'amortissement (15) est fabriqué au moins en partie à partir d'un non-tissé en métal (21') et/ou d'une matière plastique (21"), en particulier à partir de polytétrafluoroéthylène et/ou à partir d'un élastomère.

2. Dispositif de soupape de décharge selon la revendication 1,
**caractérisé en ce**
**que** l'élément d'amortissement (15) est réalisé de telle manière, en particulier est fabriqué à partir de matériaux tels, qu'il est découplé également thermiquement.

3. Dispositif de soupape de décharge selon la revendication 1 ou 2,
**caractérisé en ce**
**que** le système actionneur (6) fonctionne de manière électrique.

4. Dispositif de soupape de décharge selon l'une quelconque des revendications 1 à 3,
**caractérisé en ce**
**que** la section de couplage (18) est réalisée de manière à présenter au moins par endroits une forme sphérique.

5. Dispositif de soupape de décharge selon l'une quelconque des revendications 1 à 4,
**caractérisé en ce**
**que** la douille (22) entoure la section de couplage (18) et/ou l'organe de couplage (17) le long de l'ensemble de la périphérie.
